# FASCICULE DE BREVET EUROPEEN

(11) **EP 0 793 835 B1**
(45) Date de publication et mention de la délivrance du brevet: **25.04.2007**
(21) Numéro de dépôt: 95936569.3
(22) Date de dépôt: 30.10.1995
(51) Int. Cl.: G06K 19/077

(54) **CARTE INCORPORANT AU MOINS UN ELEMENT ELECTRONIQUE**
KARTE MIT MINDESTENS EINEM ELEKTRONISCHEN ELEMENT
BOARD WITH AT LEAST ONE BUILT-IN ELECTRONIC ELEMENT

(30) Priorité: 25.11.1994 FR 9414169
(43) Date de publication de la demande: 10.09.1997
(73) Titulaire: NagraID S.A., 2322 Le Crêt-du-Locle (CH)
(72) Inventeur: Droz, François, 2035 Corcelles (CH)
(74) Mandataire: Wenger, Joel-Théophile
(86) Numéro de dépôt international: PCT/EP1995/004249
(87) Numéro de publication internationale: WO 1996/017320

(56) Documents cités:
- EP-A- 0 197 847
- EP-A- 0 570 784
- DE-A- 4 311 493

## Description

La présente invention concerne des cartes électroniques incorporant au moins un élément électronique.

En particulier, une carte selon l'invention comprend un circuit intégré servant par exemple à l'identification de personnes.

Une catégorie de cartes électroniques concernées par l'invention est formée par les cartes sans contact électrique extérieur et possédant une bobine permettant un couplage électromagnétique avec un dispositif externe.

On comprend par carte tout objet ayant une structure sensiblement plane définissant un plan général de l'objet et présentant un contour quelconque dans ce plan général.

Le document EP 0 570 784, au nom du présent Demandeur, reflète le préambule des revendications indépendantes, et décrit divers modes de réalisation d'une carte électronique comprenant une couche formée par un liant solidifié dans laquelle est incorporé au moins un élément électronique relié électriquement à une bobine. Ce document décrit également divers modes de mise en oeuvre d'un procédé de fabrication d'une telle carte.

Dans un mode de réalisation particulièrement avantageux, il est prévu une structure de positionnement présentant au moins une ouverture principale dans laquelle est logé l'élément électronique. Dans une variante donnée, cette structure de positionnement présente sur ses faces supérieure et inférieure un relief assurant un espace pour le liant entre cette structure et les couches externes, et permettant notamment un écoulement latéral d'un surplus de liant lors de la formation de la carte. Dans chaque mode de réalisation décrit, la bobine et l'élément électronique sont logés dans l'ouverture principale de la stucture de positionnement. Dans tous les modes de réalisation proposés, les divers éléments formant ou associés au module électronique incorporé dans la couche de liant solidifié sont situés en regard de surfaces entièrement planes.

Selon un mode de mise en oeuvre du procédé de fabrication décrit dans le document EP 0 570 784, il est prévu les diverses étapes suivantes pour la fabrication d'une carte :
I) Apport, sur une surface de travail, d'une première couche extérieure formée d'un matériau solide;
II) Placement d'au moins un élément électronique sur la première couche extérieure;
III) Apport d'un liant sur la première couche extérieure;
IV) Apport, en regard de la première couche extérieure et sur ledit liant, d'une deuxième couche extérieure formée d'un matériau solide;
V) Application d'une pression sur les première et deuxième couches extérieures jusqu'à ce que ces couches extérieures soient situées l'une par rapport à l'autre à une distance prédéterminée.

Dans une étape finale, le liant est solidifié pour former une couche intermédiaire entre les couches extérieures.

Selon une caractéristique particulière du procédé décrit ci-avant, une structure de positionnement, définissant au moins une zone interne servant notamment au positionnement de la bobine, est apportée entre les étapes I et IV du procédé.

Selon une variante du procédé décrit ci-avant, il est prévu d'apporter premièrement la couche extérieure plane et les divers éléments à incorporer dans la carte, notamment l'élément électronique relié électriquement à la bobine et également la structure de positionnement lorsque celle-ci est prévue. Ensuite, le liant est apporté sous forme de liquide visqueux. Sur ce liant est alors apporté la deuxième couche extérieure. Finalement, à l'aide de moyens de pression, une pression est exercée sur les couches extérieures, et par conséquent sur le liant, selon une direction perpendiculaire à la surface de travail de manière à former la couche de liant dans laquelle sont incorporés les divers éléments prévus.

La variante du procédé décrite ci-avant est très avantageuse d'un point de vue économique car elle permet de produire de grandes quantités de cartes pour un faible coût. De plus, cette variante est avantageuse par le fait qu'elle ne nécessite pas un apport de chaleur pour fondre les couches extérieures, évitant ainsi des phénomènes de retrait de la matière et de ceintrage de la carte une fois refroidie. Cependant, le Demandeur a observé au cours de nombreuses expérimentations que le procédé décrit ci-avant apporte des résultat satisfaisants pour plusieurs réalisations particulières, mais que par contre un certain nombre de cartes obtenues par ce procédé et ayant une des structures proposées dans le document EP 0 570 784 ne présentent pas une planéité suffisamment satisfaisante, de telle sorte que, pour certaines réalisations, le rendement industriel est relativement faible.

En effet, l'exigence de planéité pour des cartes électroniques est particulièrement élevée, notamment lorsqu'une impression est prévue à une surface externe de ces cartes. Certaines techniques d'impression nécessitent des surfaces externes absolument planes, sans quoi des déformations apparaissent dans le motif imprimé.

Le but de la présente invention est de pallier les inconvénients restants dans l'invention décrite dans le document EP 0 570 784 en fournissant une carte électronique présentant une très bonne planéité et aucun air résiduel dans la couche de liant, cette carte pouvant également être obtenue à l'aide d'un procédé peu onéreux.

Il est à mentionner ici que le Demandeur a effectué de nombreuses recherches sur les cartes produites selon le procédé décrit ci-avant pour détecter la nature du problème causant des déformations à la surface d'un certain nombre de cartes. Lors de ces recherches, le Demandeur a premièrement constaté que, dans un certain nombre d'applications, la bobine occupait une surface relativement importante en projection dans le plan général de la carte. Ensuite, contrairement à la représentation des bobines dessinées sur les figures du document EP 0 570 784, les bobines utilisées dans les cartes électroniques présentent généralement une section de forme rectangulaire. De plus, ces bobines sont auto-porteuses, c'est-à-dire que les spires de ces bobines sont collées les unes aux autres. Ainsi, la bobine présente une forme déterminée et une certaine rigidité.

Dans la variante du procédé décrite ci-avant, lorsque la bobine est apportée sur la première couche extérieure plane, la surface inférieure de cette bobine est alors en appui contre la face interne de cette première couche extérieure. Lorsque le liant est apporté sous forme de liquide visqueux et qu'une pression est exercée sur celui-ci, le liant se répand et couvre la surface supérieure de la bobine, ce qui engendre une pression résultante sur cette bobine en direction de la surface de travail. La bobine est ainsi plaquée contre la première couche extérieure et le liant ne s'infiltre pas entre la bobine et cette première couche extérieure. De ce fait, la première couche extérieure n'adhère pas à la couche de liant sur sa surface de superposition avec la bobine, ce qui peut engendrer des déformations en surface de la première couche extérieure après solidification du liant et retrait de la pression exercée sur celui-ci.

Le problème susmentionné est encore amplifié par un deuxième problème lié à l'état de la surface inférieure de la bobine. En effet, la bobine est formée de spires présentant une section circulaire. Les bobines sont formées à l'aide d'un dispositif de bobinage présentant généralement deux flasques entre lesquels la bobine est formée. Inévitablement, les surfaces de la bobine présentent une multitude de sillons dont certains peuvent avoir une profondeur non négligeables. Une fois la bobine apportée sur la face interne de la couche extérieure, les sillons situés sur la surface inférieure de la bobine définissent au moins un espace sensiblement clos entre la bobine et la couche extérieure résultant sur un emprisonnement d'air lors de la formation de la carte. Cet air résiduel peut être légèrement pressurisé lors de l'application d'une pression sur le liant servant à former la couche de liant, ce qui engendre des déformations de la face externe de la couche extérieure lorsque l'application de la pression a cessée. De plus, il a été observé que, lorsque ladite pression est retirée, l'air résiduel emprisonné entre la bobine et la couche extérieure est susceptible de diffuser dans la carte et notamment à l'interface entre la couche extérieure initialement apportée et la couche de liant.

On mentionnera que des problèmes similaires apparaissent avec d'autres éléments incorporés dans une carte électronique, notamment lorsqu'il est prévu un substrat sur lequel l'élément électronique est fixé, tel que cela est décrit aux figures 10 et 11 du document EP 0 570 784. De tels problèmes peuvent également se rencontrer avec d'autres éléments incorporés dans la carte, par exemple avec une unité électronique d'une certaine dimension présentant une face plane ou un anneau de protection à l'intérieur duquel est logé par exemple un circuit intégré.

Pour atteindre le but de l'invention en résolvant les problèmes susmentionnés, l'invention a pour objet une carte comprenant un élément incorporé formant au moins partiellement un module électronique et présentant une première surface sensiblement plane ou une surface présentant an moins une cavité externe située entre des saillies externes du module électronique, la cavité externe étant formée entre cette première surface et un plan géométrique s'appuyant sur ces saillies, une première couche en matériau solide et une deuxième couche formée par un liant solidifié dans lequel est noyé ledit élément. La première couche présente une première face interne à laquelle adhère le liant solidifié. Cette carte est caractérisée en ce que la première face interne présente un relief prévu au moins à l'intérieur d'une première zone comprenant la surface de superposition entre ladite première surface dudit élément et ladite première face interne, ce relief définissant en creux des vallées traversant ladite première zone.

La carte selon l'invention présente au moins deux avantages importants. Premièrement, le relief prévu à la face interne de la première couche assure une évacuation correcte de tout air résiduel lors de la fabrication de la carte à l'aide d'un liant liquide visqueux apporté sur les divers éléments incorporés dans cette carte. Deuxièmement, cette carte permet au liant apporté sous forme de liquide visqueux de s'infiltrer correctement entre ladite première surface dudit élément incorporé dans la deuxième couche et la face interne de la première couche. Selon une variante d'exécution, la totalité de la face interne de la première couche présente un relief définissant en creux des vallées traversant cette face interne.

Selon une variante de réalisation, il est prévu une troisième couche disposée de manière que la deuxième couche forme une couche intermédiaire entre les première et troisième couches.

Selon une autre variante de réalisation, il est prévu d'apporter en plus dudit élément une structure de positionnement de cet élément à l'intérieur de la couche de liant.

D'autres caractéristiques et avantages de la présente invention seront encore mieux décrits à l'aide de la description suivante, faite en référence aux dessins annexés à titre d'exemples nullement limitatifs, dans lesquels :
- la figure 1 est une vue en coupe d'un premier mode de réalisation d'une carte électronique selon l'invention;
- la figure 2 représente schématiquement un mode de mise en oeuvre d'un procédé de fabrication de la carte représenté à la figure 1;
- la figure 3 est une vue en coupe d'une première variante du premier mode de réalisation;
- la figure 4 est une vue selon la ligne de coupe IV-IV de la figure 3;
- la figure 5 est une vue en coupe d'une deuxième variante du premier mode de réalisation;
- la figure 6 est une vue selon la ligne de coupe VI-VI de la figure 5.

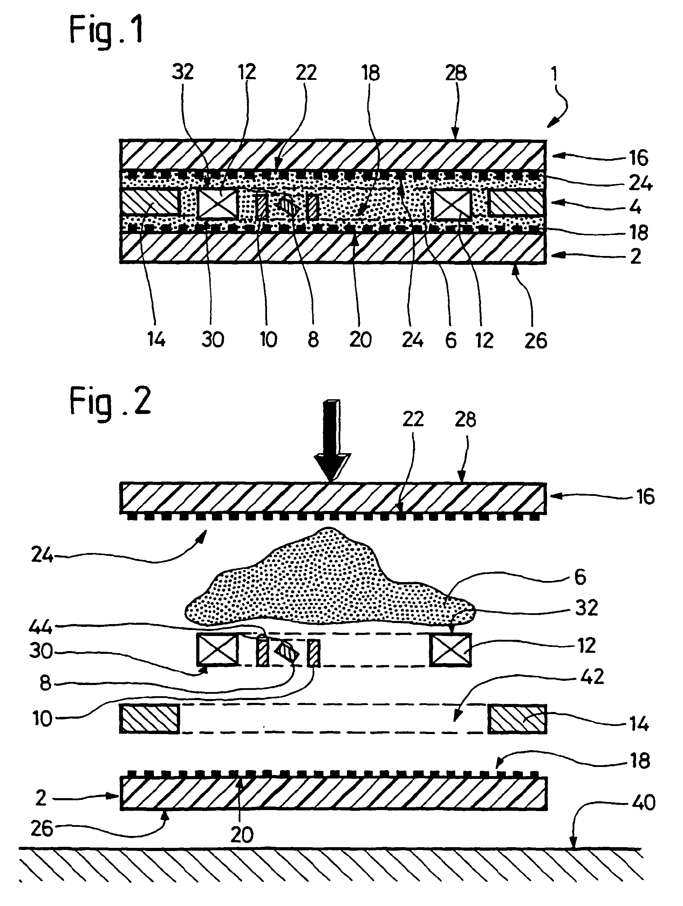

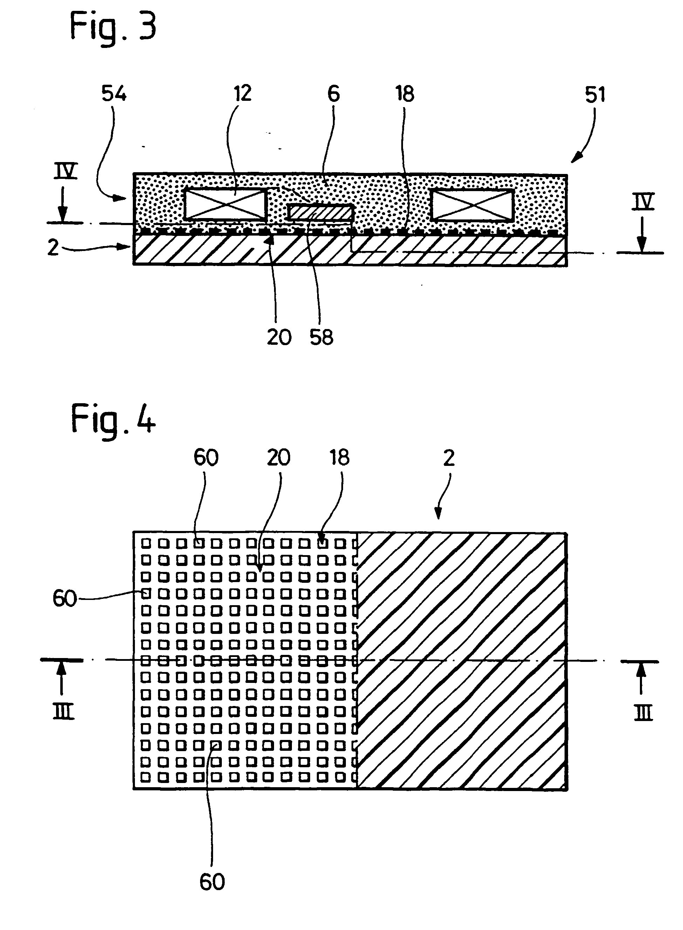

A l'aide des figures 1 et 2, on décrira ci-après un premier mode de réalisation d'une carte électronique selon l'invention, ainsi qu'un mode de mise en oeuvre d'un procédé de fabrication de cette carte.

Sur la figure 1, la carte 1 comprend essentiellement trois couches, à savoir une première couche 2 formée d'un matériau solide, notamment en matière plastique synthétique, une deuxième couche 4 formée d'un liant solidifié 6 dans lequel sont noyés divers éléments, à savoir une unité électronique 8 logée à l'intérieur d'un anneau de protection 10 et relié électriquement à une bobine 12 servant au couplage magnétique avec une unité de communication externe non représentée. En outre, il est prévu dans la couche 4 une structure de positionnement 14 servant à positionner la bobine 12 et l'unité électronique 8 l'intérieur de la carte. En particulier, la structure de positionnement 14 sert à définir une zone interne à l'intérieur de la couche 4 de liant pour la bobine 12 et l'unité électronique 8. L'utilité de cette structure de positionnement a déjà été décrite dans le document EP 0 570 784 et sera à nouveau précisée dans la description du mode de mise en oeuvre du procédé selon la présente invention.

La carte 1 comprend en outre une troisième couche 16 formée d'un matériau solide, par exemple un matériau plastique. Le liant 6 est choisi de telle manière qu'il présente, une fois solidifié, une bonne adhérence au matériau utilisé pour les couches 2 et 16. Selon une caractéristique essentielle de l'invention, il est prévu un relief 18 sur la face interne 20 de la première couche 2. Selon une caractéristique particulière de l'invention, la face interne 22 de la couche 16 a un relief 24 sensiblement identique au relief 18. On notera encore que les couches 2 et 16 comprennent respectivement deux faces externes planes 26 et 28 sur lesquelles un motif imprimé peut être prévu.

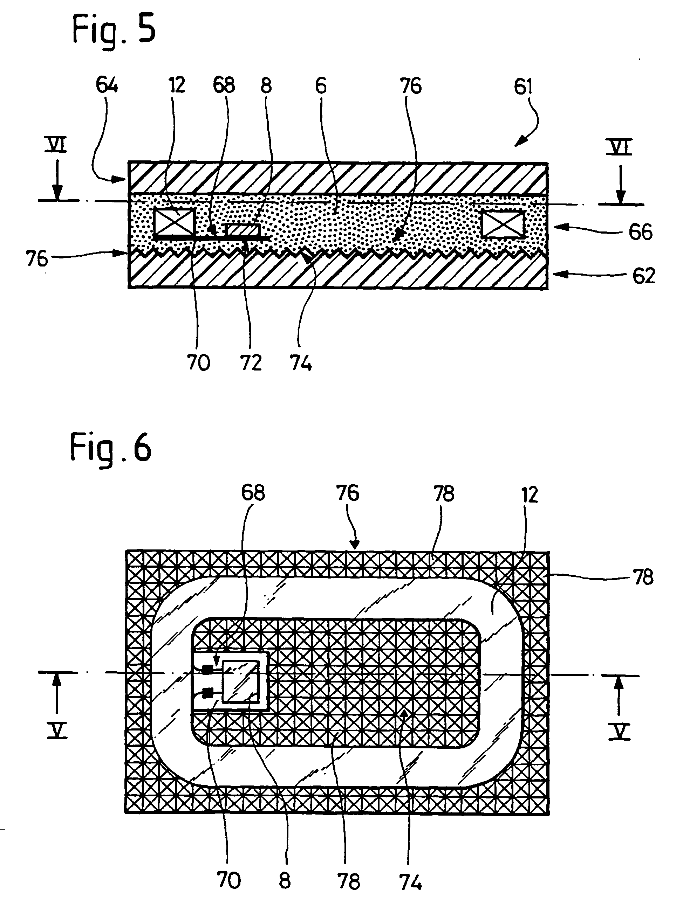

La structure de positionnement 14 présente, par exemple, une configuration semblable à l'une quelconque des configurations prévues dans le document EP 0 570 784. La bobine 12 a une section de forme rectangulaire et présente une première surface 30 et une deuxième surface 32 sensiblement planes et situées respectivement en regard des faces internes 20 et 22 des couches 2 et 16. On mentionnera ici que la totalité des faces internes 20 et 22 sont recouvertes respectivement par les reliefs 18 et 24. Ainsi, en particulier, la zone de superposition de la face 20 de la couche 2 avec la surface 30 de la bobine 12 présente un relief. La structure du relief est prévue de telle manière que ce relief présente en creux des vallées traversant entièrement ladite zone de superposition. Deux variantes particulières pour le relief prévu sur les faces 20 et 22 seront décrites à l'aide des figures 4 et 6.

Sur la figure 2 est représenté schématiquement un mode de fabrication particulièrement avantageux et peu onéreux de la carte 1. Le procédé de fabrication selon l'invention comprend les étapes consécutives suivantes :
I) Apport sur une surface de travail 40 de la première couche 2 présentant sur sa face interne 20 le relief 18 décrit ci-avant. La face externe 26 est posée sur la surface de travail 40 plane, la face interne 20 étant située du côté opposé à cette surface de travail 40;
II) Apport, sur la face interne 20, de la structure de positionnement 14, laquelle présente une ouverture principale 42 dans laquelle sont apportées ensuite la bobine 12 et l'unité électronique 8 située à l'intérieur de l'anneau de protection 10;
III) Apport d'un liant 6 sous forme de liquide visqueux en quantité suffisante pour former la couche 4 de la carte 1;
IV) Apport de la deuxième couche extérieure 16 sur le liant 6 de telle manière que la face interne 22 présentant le relief 24 est situé du côté du liant 6;
V) Application d'une pression sur la face externe 28 de la couche 16, et par conséquent sur le liant 6 à l'état de liquide visqueux, de manière que ce liant 6 s'étale uniformément entre les deux couches extérieures 2 et 16 pour former une couche intermédiaire d'une hauteur prédéterminée;
VI) Durcissement du liant 6 pour former la deuxième couche 4 de la carte 1.

Lors de l'étape VI, une pression dirigée perpendiculairement à la surface de travail 40 sera avantageusement maintenue. On notera que, sans sortir du cadre de la présente invention, la structure moléculaire et/ou la composition du liant 6 peut varier entre l'état liquide dans lequel il est apporté et l'état solide final.

Grâce au relief 18 prévu sur la face interne 20 de la première couche extérieure 2, les divers éléments apportés, notamment la bobine 12 et le cadre de positionnement 14, ne peuvent pas être appliqués contre la face interne 20 de manière à empêcher l'infiltration du liant 6 ou à retenir un air résiduel entre des saillies externes définissant des cavités externes, notamment sur la surface 30 de la bobine 12, lors de l'étape V dans laquelle une pression est exercée pour répandre uniformément le liant 6 entre les deux couches extérieures 2 et 16. En effet, le relief 18 présentant en creux des vallées traversant la face interne 20, le liant peut aisément pénétrer entre les surfaces inférieures des éléments incorporés et la face interne 20, ce qui assure ainsi une bonne adhérence des diverses couches de la carte et l'évacuation de tout air résiduel néfaste pour la planéité de la carte.

On mentionnera que le liant 6 étant apporté ultérieurement à l'apport des divers éléments incorporés dans la couche 4, ce liant 6 se répand plus aisément sur les surfaces supérieures, notamment la surface 32 de la bobine 12, des divers éléments incorporés dans la couche 4. Ceci est d'autant plus vrai que la quantité de liant 6 apporté est supérieure à la quantité de liant formant finalement la couche 4. Cependant, dans le cas où la hauteur de l'un des éléments incorporés, notamment de la bobine 12, est sensiblement égale à la hauteur prédéterminée de la couche intermédiaire 4, et étant donné la présence du relief 18 sur la face 20 de la couche 2, il se peut que ces éléments remontent quelque peu lors de l'application d'une pression et viennent s'appuyer contre la face interne 22 de la deuxième couche extérieure 16. Pour éviter cela, il a été prévu que la face interne 22 de la couche 16 présente également un relief 24 similaire au relief 18.

On notera que le procédé décrit ici peut être réalisé dans un environnement ayant un certain vide d'air. De plus, la pression exercée sur le liant peut être fournie par divers moyens, notamment une presse plate, un ou plusieurs cylindre(s) de laminage.

A l'aide des figures 3 et 4, on décrira ci-après brièvement une variante de réalisation d'une carte selon l'invention.

La carte 51 comprend une couche 2, identique à celle de la carte 1, comprenant notamment une face interne 20 présentant un relief 18. La carte 51 comprend en outre une couche 54 formée d'un liant solidifié 6 dans laquelle est incorporée une bobine 12 reliée électriquement à une unité électronique 58. La bobine 12 et l'unité électronique 58 sont totalement noyées dans le liant 6 de la couche 54.

Sur la figure 4 est représentée une vue en plan selon la ligne de coupe IV-IV de la figure 3, le liant 6 n'étant pas représenté pour permettre une vue partielle de la face interne 20 présentant le relief 18. Ce relief 18 est formé par un ensemble de petits blocs 60 de faible hauteur. Ainsi, le relief 18 définit en creux des vallées entre l'ensemble de ces blocs 60, ces vallées traversant entièrement la face interne 20 de la couche extérieure 2 et définissent de multiples chemins pour l'infiltration du liant 6 et l'évacuation de l'air résiduel lors du procédé de fabrication de la carte décrit ci-avant. Par exemple, le relief 18 est un relief imprimé par des techniques d'impression conventionnelles ou formé par gauffrage de la couche 2.

A l'aide des figures 5 et 6, on décrira ci-après brièvement une deuxième variante de réalisation d'une carte selon l'invention.

La carte 61 comprend une première couche extérieure 62, une deuxième couche extérieure 64 et une couche 66 intermédiaire formée par un liant 6 solidifié. A l'intérieur de la couche 66 est incorporée une bobine 12 et une unité électronique 8 disposée sur la face 68 d'un substrat 70. Sur cette face 68 est également disposée partiellement la bobine 12. Le substrat 70 sert notamment à définir la position de l'unité 8 relativement à la bobine 12 et sert également de support d'interconnexion électrique entre cette unité 8 et la bobine 12.

Le substrat 70 est situé du côté de la couche 62, la face plane 72 de ce substrat étant située en regard de la face interne 74 de la couche 62 qui présente un relief 76 définissant un ensemble de pyramides 78 d'une hauteur relativement faible par rapport à la hauteur de la couche 66. On mentionnera que, lors du procédé de fabrication de la carte 61, la couche 62 est premièrement apportée sur la surface de travail. Ensuite, le liant 6 est apporté une fois que l'ensemble formé par la bobine 12, l'unité 8 et le support 70 a été posé sur la couche 62.

A nouveau, dans la vue en plan de la figure 6 selon la ligne de coupe VI-VI de la figure 5, le liant 6 n'a pas été représenté de manière à mettre en évidence le relief 76 et l'ensemble formé par la bobine 12, l'unité 8 et le substrat 70. Par exemple, le relief 76 est obtenu par moltage ou par étampage de la couche 62.

Le relief 76 définit en creux des vallées traversant la face interne 74 de la couche 62. De plus, un tel relief minimise la surface de contact entre les éléments incorporés et la face interne 74 si ces éléments incorporés sont disposés en appui contre le relief 76.

Comme cela a déjà été mentionné, l'importance de la présence d'un relief est essentiel sur la couche extérieure inférieure apportée initialement lors du procédé de fabrication d'une carte selon l'invention. La présence d'un tel relief sur la face interne de la couche supérieure est avantageuse et permet de garantir une carte parfaitement plane. Toutefois, les nombreuses expériences réalisées ont montré que le relief prévu sur la face interne de la couche supérieure n'était pas indispensable dans un certain nombre de cartes fabriquées selon le procédé de l'invention. Qui plus est, dans certains modes de réalisation, il se peut que les éléments incorporés présentent seulement une seule surface sensiblement plane, située en regard de la couche inférieure.

En d'autres termes, le relief prévu sur la face interne de la couche inférieure joue un rôle essentiel lorsque les éléments incorporés présentent au moins une surface inférieure sensiblement plane ou présentant des cavités externes situées entre des saillies externes contre lesquelles un plan géométrique peut être appuyé de manière à fermer sensiblement ces cavités. Ensuite, lorsque les éléments incorporés présentent au moins une surface supérieure sensiblement plane, il est généralement avantageux de prévoir également un relief sur la face interne de la couche extérieure supérieure. Ce dernier relief est d'autant plus avantageux que le ou les éléments présentant une surface supérieure plane ont une hauteur inférieure, mais sensiblement égale à la hauteur de la couche formée par le liant solidifié dans laquelle ils sont incorporés.

Pour des raisons de sécurité et de rendement industriel, il est toutefois préférable de prévoir un relief sur chacune des deux faces internes respectives des deux couches extérieures.

Finalement, on mentionnera que le liant 6 apporté sous forme de liquide visqueux est choisi de préférence de telle manière qu'il puisse être apporté avec une température relativement faible, notamment à température ambiante. A titre d'exemple, le liant est constitué par une résine connue de l'homme du métier. Parmi ces résines, on mentionnera la résine époxi et les colles à deux composants.

## Revendications

1. Carte comprenant un élément incorporé (10, 12; 58; 8, 70) formant au moins partiellement un module électronique et présentant une première surface (30) sensiblement plane ou une surface présentant au moins une cavité externe située entre des saillies externes du module électronique, la cavité externe étant formée entre cette première surface et un plan géométrique s'appuyant sensiblement contre ces saillies, une première couche (2; 62) formée d'un matériau solide et une deuxième couche (4; 54; 66) formée par un liant (6) solidifié dans laquelle est situé ledit élément dont ladite première surface est située sensiblement en regard d'une première face interne (20; 74) de ladite première couche à laquelle adhère ledit liant solidifié, cette carte étant **caractérisée en ce que** ladite première face interne présente un relief (18; 76) prévu au moins à l'intérieur d'une première zone comprenant la surface de superposition avec ladite première surface dudit élément, ce relief définissant en creux des vallées traversant ladite première zone.

2. Carte selon la revendication 1, comprenant en outre une troisième couche (16; 64) ayant une deuxième face interne (22) à laquelle adhère ledit liant (6) solidifié de ladite deuxième couche (4; 66), cette troisième couche étant disposée de manière que ladite deuxième couche forme une couche intermédiaire entre lesdites première et troisième couches (2, 16; 62, 64).

3. Carte selon la revendication 2, dans laquelle ledit élément (8, 10, 12, 58) présenta une deuxième surface (32) sensiblement plane ou une surface présentant au moins une cavité externe située entre des saillies externes du module électronique, la cavité externe étant formée entre cette deuxième surface et un plan géométrique s'appuyant contre ces saillies, et ladite deuxième face interne (22) présente un relief (24) prévu au moins à l'intérieur d'une deuxième zone comprenant la surface de superposition avec ladite deuxième surface dudit élément, ce relief définissant en creux des vallées traversant ladite deuxième zone.

4. Carte selon l'une des revendications 1 à 3, ledit élément (12) étant constitué par une bobine présentant une section sensiblement rectangulaire, cette bobine étant reliée électriquement à une unité électronique (8; 58).

5. Carte selon l'une des revendications 1 à 3, ledit élément (10) étant constitué par un anneau de protection rigide entourant une unité électronique (8).

6. Carte selon la revendication 1 ou 2, ledit élément (70) étant formé par un substrat sur lequel est agencé fixement une unité électronique (8).

7. Carte selon l'une des revendications 1 à 3, ledit élément (58) étant formé par une unité électronique.

8. Carte selon l'une des revendications 1 à 7, ledit relief (18; 76) prévu sur ladite première face interne (20; 74) étant prévu sur la totalité de cette première face interne, ce relief définissant en creux des vallées traversant entièrement ladite première face interne.

9. Carte selon la revendication 1, ledit relief (18) étant formé par une impression réalisée sur une surface initialement plane de ladite première couche (2).

10. Carte selon la revendication 1, ledit relief (18; 76) étant obtenu par moletage, par étampage ou par gauffrage de ladite première couche (2; 62).

11. Procédé de fabrication d'une carte comprenant les étapes successives suivantes :
A) Apport sur une surface de travail (40) d'une première couche (2; 62) ayant une face interne (20; 74), opposée à cette surface de travail, présentant au moins dans une zone un relief (18; 76) définissant en creux des vallées traversant cette zone.
B) Apport sur ladite première couche d'un élément formant au moins partiellement un module électronique (10, 12; 58; 8, 70) et disposé de manière à être superposé à ladite zone;
C) Apport sur ladite première couche et sur ledit élément d'un liant (6) sous forme de liquide visqueux,
D) Application d'une pression sur ledit liant de manière que ce liant s'étale uniformément sur ladite première couche pour former une couche ayant une hauteur prédéterminée, et durcissement dudit liant (6) pour former une deuxième couche (4; 54; 66),

12. Procédé selon la revendication 11, comportant entre lesdites étapes C et D l'apport d'une troisième couche (16; 64).

13. Procédé selon la revendication 11 ou 12, comportant en outre, entre les étapes A et D, l'apport d'une structure de positionnement (14) présentant au moins une ouverture traversante (42) prévue pour le positionnement dudit élément (12).

## Claims

1. Card comprising an incorporated element (10, 12, 14; 58, 70) forming at least partially an electronic module and exhibiting a first surface (30) substantially planar or a surface presenting at least one external cavity located between external projections of the electronic module, the external cavity being formed between this first surface and a geometric plane bearing substantially against these projections, a first layer (2; 62) formed from a solid material and a second layer (4; 54; 66) formed by a solidified binder in which said element is located, of which said first surface is located substantially opposite a first inner face (20; 74) of said first layer to which said solidified binder adheres, this card being **characterized in that** said first inner face exhibits a relief (18; 76) provided at least on the interior of a first zone comprising the surface of superposition with said first surface of said element, such relief defining sunken valleys traversing said first zone.

2. Card according to claim 1, comprising furthermore a third layer (16; 64) having a second inner face (22) to which said solidified binder (6) of said second layer (4; 66) adheres, such third layer being arranged in a manner such that said second layer forms an intermediate layer between said first and third layers (2, 16; 62, 64).

3. Card according to claim 2, in which said element (10, 12, 14) exhibits a second surface (32) substantially planar or a surface presenting at least one external cavity located between external projections of the electronic module, the external cavity being formed between said second surface and a geometric plane bearing against these projections, and said second inner face (22) exhibits a relief (24) provided at least on the interior of a second zone comprising the surface of superposition with said second surface of said element, this relief defining sunken valleys traversing said second zone.

4. Card according to any of claims 1 to 3, said element (12) being constituted by a coil exhibiting a substantially rectangular cross section, this coil being electrically coupled to an electronic unit (8; 58).

5. Card according to any of claims 1 to 3, said element (10) being constituted by a rigid protection ring surrounding an electronic unit (8).

6. Card according to claim 1 or 2, said element (70) being formed by a substrate on which an electronic unit (8) is fixedly arranged.

7. Card according to any of claims 1 to 3, said element (58) being formed by an electronic unit.

8. Card according to any of claims 1 to 7, said relief (18; 76) provided on said first inner face (20; 74) being provided on the totality of said first inner face, such relief defining sunken valleys traversing entirely said first inner face.

9. Card according to claim 1, said relief (18) being formed by an indentation made on an initially planar surface of said first layer (2).

10. Card according to claim 1, said relief (18; 76) being obtained by knurling, by stamping or by embossing said first layer (2; 62).

11. Method of manufacturing a card comprising the following successive steps:
A) bringing onto a work surface (40) a first layer (2; 62) having an internal face (20, 74), opposed to this working surface, presenting at least in a zone a relief (18, 76) defining sunken valleys traversing this zone;
B) bringing onto said first layer an element forming at least partially an electronic module (10, 12, 14; 58; 70) and disposed in such a way to be superimposed on said zone;
C) applying on said first layer and on said element, a binder (6) in the form of a viscous liquid;
D) applying pressure on said binder so that this binder spreads out uniformly over said first layer in order to form a layer having a predetermined height, and hardening said binder (6) in order to form a second layer (4; 54; 66).

12. Method according to claim 11, including, between said steps C and D, the supplying of a third layer (16; 64).

13. Method according to claim 11 or 12, furthermore including, between steps A and D, the supplying of a positioning structure (14) exhibiting at least one traversing opening (42) provided for the positioning of said element (12).

## Patentansprüche

1. Karte mit einem eingebauten Element (10, 12, 14; 58, 70), das zumindest teilweise einen elektronischen Modul bildet und eine im Wesentlichen ebene erste Oberfläche (30) oder eine Oberfläche, die zumindest eine äussere Höhlung aufweist, die sich zwischen äusseren Vorsprüngen des elektronischen Moduls befindet, wobei die äussere Höhlung zwischen dieser ersten Oberfläche und einer geometrischen Ebene gebildet wird, die im Wesentlichen an diese Vorsprünge angedrückt ist, eine erste Schicht (2; 62), die aus einem festen Material gebildet ist, und eine zweite Schicht (4; 54; 66) aufweist, die aus einem erstarrten Bindemittel (6) gebildet ist und in der sich das Element befindet, dessen erste Oberfläche im Wesentlichen einer ersten Innenseite (20; 74) der ersten Schicht gegenüber liegt, an der das erstarrte Bindemittel haftet, wobei diese Karte **dadurch gekennzeichnet ist, dass** die erste Innenseite ein Relief (18; 76) aufweist, das zumindest innerhalb eines ersten Bereichs vorgesehen ist, der zumindest teilweise die Fläche der Überlagerung mit der ersten Oberfläche des Elements umfasst, wobei dieses Relief diesen ersten Bereich als Vertiefungen querende Täler definiert.

2. Karte nach Anspruch 1, ausserdem eine dritte Schicht (16; 64) umfassend, die eine zweite Innenseite (22) besitzt, an der das erstarrte Bindemittel (6) der zweiten Schicht (4; 66) haftet, wobei diese dritte Schicht so angeordnet ist, dass die zweite Schicht eine Zwischenschicht zwischen der ersten und zweiten Schicht (2, 16; 62, 64) bildet.

3. Karte nach Anspruch 2, in der das Element (10, 12, 14) eine zweite, im Wesentlichen ebene Oberfläche (32) oder eine Oberfläche aufweist, die zumindest eine äussere Höhlung aufweist, die sich zwischen äusseren Vorsprüngen des elektronischen Moduls befindet, wobei die äussere Höhlung zwischen dieser zweiten Oberfläche und einer geometrischen Ebene gebildet wird, die im Wesentlichen an diese Vorsprünge angedrückt ist, und die zweite Innenseite (22) ein Relief (24) aufweist, das zumindest innerhalb eines zweiten Bereichs vorgesehen ist, der die Fläche der Überlagerung mit der zweiten Oberfläche des Elements umfasst, wobei dieses Relief diesen zweiten Bereich als Vertiefungen querende Täler definiert.

4. Karte nach einem der Ansprüche 1 bis 3, wobei das Element (12) aus einer Spule besteht, die einen im Wesentlichen rechteckigen Querschnitt aufweist und elektrisch mit einer elektronischen Einheit (8; 58) verbunden ist.

5. Karte nach einem der Ansprüche 1 bis 3, wobei das Element (10) aus einem starren Schutzring besteht, der eine elektronische Einheit (8) umgibt.

6. Karte nach Anspruch 1 oder 2, wobei das Element (70) durch ein Substrat gebildet wird, auf dem eine elektronische Einheit (8) fest angeordnet ist.

7. Karte nach einem der Ansprüche 1 bis 3, wobei das Element (58) aus einer elektronischen Einheit gebildet wird.

8. Karte nach einem der Ansprüche 1 bis 7, wobei das auf der ersten Innenseite (20; 74) vorgesehene Relief (18; 76) auf der Gesamtheit dieser ersten Innenseite vorgesehen ist und diese erste Innenseite als Vertiefungen ganz querende Täler definiert.

9. Karte nach Anspruch 1, wobei das Relief (18) aus einem Eindruck gebildet wird, der auf einer anfänglich ebenen Oberfläche dieser ersten Schicht (2) angebracht wird.

10. Karte nach Anspruch 1, wobei das Relief (18; 76) durch Prägewalzen, Stanzen oder Prägedruck der ersten Schicht (2; 62) gewonnen wird.

11. Herstellungsverfahren einer Karte mit den folgenden aufeinander folgenden Schritten:
A) Aufbringen einer ersten Schicht (2; 62) auf eine Arbeitsfläche (40), wobei die Schicht eine Innenseite (20, 74) besitzt, die zu dieser Arbeitsfläche entgegengesetzt liegt und in zumindest einem Bereich ein Relief (18, 76) aufweist, das diesen Bereich als Vertiefungen querende Täler definiert;
B) Aufsetzen eines Elements auf die erste Schicht, das zumindest teilweise einen elektronischen Modul (10, 12, 14; 58; 70) bildet und so angeordnet ist, dass es dem benannten Bereich überlagert ist;
C) Aufbringen eines Bindemittels (6) in Gestalt einer viskosen Flüssigkeit auf die erste Schicht und auf das Element;
D) Anlegen eines Druckes an das Bindemittel, dergestalt, dass sich dieses Bindemittel gleichförmig über die erste Schicht ausbreitet, um eine Schicht zu bilden, die eine im Voraus bestimmte Höhe besitzt, und Aushärten des Bindemittels (6), um eine zweite Schicht (4; 54; 66) zu bilden.

12. Verfahren nach Anspruch 11, zwischen den Schritten C und D den Auftrag einer dritten Schicht (16; 64) aufweisend.

13. Verfahren nach Anspruch 11 oder 12, ausserdem zwischen den Schritten A und D das Aufbringen einer Struktur für die Positionierung (14) umfassend, die zumindest eine hindurchgehende Öffnung (42) aufweist, die für die Positionierung des Elements (12) vorgesehen ist.
